# FASCICULE DE BREVET EUROPEEN

(11) **EP 1 452 398 B1**
(45) Date de publication et mention de la délivrance du brevet: **21.12.2005**
(21) Numéro de dépôt: 04290514.1
(22) Date de dépôt: 25.02.2004
(51) Int. Cl.: B60R 13/04

(54) **Enjoliveur pour porte de véhicule automobile et procédé de montage dudit enjoliveur**
Zierleiste für eine Kraftfahrzeugtür und sein Herstellungsverfahren
Profile for a motor vehicle door and its production process

(30) Priorité: 28.02.2003 FR 0302458
(43) Date de publication de la demande: 01.09.2004
(73) Titulaire: Renault s.a.s., 92100 Boulogne Billancourt (FR)
(72) Inventeur: Hewak, Grégor, 95490 Vaureal (FR); Vivier, Pierre, 75014 Paris (FR)

(56) Documents cités:
- EP-A- 0 949 121
- US-A- 2 137 652
- US-A1- 2002 158 460
- PATENT ABSTRACTS OF JAPAN vol. 009, no. 316 (M-438), 12 décembre 1985 (1985-12-12) & JP 60 151123 A (NISSAN JIDOSHA KK), 9 août 1985 (1985-08-09)

## Description

L'invention concerne un enjoliveur pour porte de véhicule automobile. Elle concerne plus particulièrement un enjoliveur situé dans le prolongement de la vitre de la porte, entre la vitre et la custode du véhicule. L'invention concerne également un procédé de montage dudit enjoliveur.

En général, dans un véhicule, la partie supérieure d'une porte comprend une vitre mobile et, sur un des côtés de la vitre, une partie fixe, qui peut être une vitre fixe ou un élément enjoliveur opaque. Sur les portes avant de véhicule, cette partie fixe sert généralement de support à un rétroviseur. Il peut s'agir d'une plaque fixe en matière plastique, tel que décrit dans les documents DE-41 39 430 et EP-446 854, ou d'une vitre fixe insérée dans un cadre, tel que décrit dans le document DE-197 20 812.

Cependant, afin que l'aspect fini de la partie fixe soit acceptable esthétiquement, la réalisation de cette partie fixe en matière plastique nécessite une épaisseur constante. Or, selon les véhicules, la forme de certaines portes est telle que l'épaisseur de la partie fixe n'est pas constante afin que sa surface externe suive la même génératrice que les parties proches du véhicule et de la porte. Ainsi, par exemple, pour une porte arrière de véhicule, il arrive souvent que le plan de vitre de la porte ne soit pas confondu avec le plan de la custode. Il est alors nécessaire de diminuer l'écart entre les deux plans afin de préserver l'aérodynamisme de l'ensemble et de limiter les bruits qui en découlent.

Pour des portes arrière de véhicule, la partie fixe est généralement formée d'une vitre fixe. Sur certains véhicules, cette partie présente une partie métallique à l'extérieur du véhicule.

De plus, en particulier pour les portes arrière, cette partie fixe est située sensiblement au-dessus de la serrure de la porte. Il est donc nécessaire que la partie fixe soit inviolable pour des raisons de sécurité.

L'invention vise à pallier ces inconvénients en proposant un enjoliveur pour porte de véhicule automobile.

A cet effet, un premier objet de l'invention concerne un enjoliveur comprenant un premier élément présentant une face externe destinée à être visible de l'extérieur du véhicule et une face interne opposée, et un deuxième élément, et comprenant des moyens de solidarisation dudit deuxième élément sur ledit premier élément, tel que décrit dans le document JP-A- 60 012356, et des moyens de fixation dudit deuxième élément sur le châssis de la porte. La structure en deux éléments de l'enjoliveur permet de l'adapter facilement aux différents types de porte arrière. Pour différents véhicules d'une même série, il présente l'avantage de permettre de réaliser le même deuxième élément et de modifier uniquement le premier élément en fonction du véhicule et de l'aspect extérieur de ce dernier.

Dans une variante, l'enjoliveur peut comporter sur au moins l'un de ses côtés un cadre de guidage formé par lesdits premier et deuxième éléments et apte à recevoir le bord d'un élément du véhicule et/ou d'un joint. Cet élément est par exemple la vitre arrière du véhicule qui peut alors coulisser dans le cadre de guidage.

Dans un mode de réalisation particulier les moyens de solidarisation sont aptes à empêcher tout mouvement relatif des deux éléments. Ainsi, lorsque l'enjoliveur est monté, il est très difficile, voire impossible, de séparer les premier et deuxième éléments et d'accéder à la commande électromécanique de la serrure de la porte.

Ces moyens de solidarisation peuvent présenter des protubérances solidaires du deuxième élément venant en appui contre des surfaces de butée solidaires du premier élément. Plus particulièrement le premier élément peut être pourvu :
- d'une pluralité de premières surfaces de butée sensiblement perpendiculaires à la face interne du premier élément et s'étendant sensiblement dans une première direction de ladite face, au moins une partie desdites premières surfaces étant distante d'au moins une autre partie desdites premières surfaces suivant une deuxième direction sensiblement perpendiculaire à la première direction,
- d'une pluralité de deuxièmes surfaces de butée sensiblement perpendiculaires à la face interne du premier élément et s'étendant dans la deuxième direction, au moins une partie desdites deuxièmes surfaces étant distante d'au moins une autre partie desdites deuxièmes surfaces suivant la première direction, et
- d'une pluralité de troisièmes surfaces de butée s'étendant dans un plan sensiblement parallèle à la face interne du premier élément et à distance de ce dernier, ladite pluralité de troisièmes surfaces étant supportée par une partie de la pluralité de premières surfaces et/ou une partie de la pluralité de deuxièmes surfaces.

Les mouvements relatifs des deux éléments sont ainsi bloqués dans les trois directions de l'espace, afin de réduire au minimum les vibrations et de participer à la sécurité de l'enjoliveur monté. De plus, cet arrangement permet de renforcer la solidité de l'ensemble et de limiter la quantité de matière utilisée.

Plus particulièrement, le deuxième élément comprend au moins une languette d'encliquetage s'étendant sur au moins un de ses bords et formant des moyens de fixation. La ou les languettes participent notamment au positionnement correct de l'enjoliveur sur le châssis.

Les moyens de fixation peuvent comprendre au moins un système vis-écrou apte à coopérer avec au moins un orifice correspondant du deuxième élément et au moins un orifice guide correspondant du châssis du véhicule. Ce système vis-écrou participe également au positionnement de l'enjoliveur et rend l'enjoliveur indémontable de l'extérieur du véhicule.

Avantageusement, pour un enjoliveur destiné à une porte droite de véhicule, respectivement à une porte gauche, le pas de vis du système vis-écrou sera orienté vers la droite, respectivement vers la gauche. De cette manière, lors du serrage de l'écrou, pour des efforts de serrage similaires, un positionnement quasiment identique sera obtenu pour les enjoliveurs des deux portes droite et gauche par rapport au châssis du véhicule.

Avantageusement, le premier élément et/ou le deuxième élément est (sont) en matière plastique. Le matériau utilisé pour le premier élément peut ainsi être choisi en fonction des autres éléments enjoliveurs du véhicule, de manière à améliorer l'esthétique du véhicule. En revanche, le matériau utilisé pour le deuxième élément peut être quelconque et moins coûteux étant donné qu'il sera invisible après montage.

Avantageusement, l'épaisseur du premier élément est sensiblement constante afin d'améliorer l'aspect fini extérieur de enjoliveur, en particulier lorsque de la matière plastique est utilisée. Si l'enjoliveur doit présenter une épaisseur variable, ceci peut être obtenu en faisant varier l'épaisseur du deuxième élément.

Un autre objet de l'invention concerne un procédé de montage d'un enjoliveur selon l'invention sur un châssis de porte de véhicule, le procédé comprenant les étapes consistant à :
- solidariser les premier et deuxième éléments de l'enjoliveur grâce aux moyens de solidarisation,
- insérer au moins une partie saillante du deuxième élément de l'enjoliveur dans au moins un orifice guide prévu à cet effet dans ledit châssis,
- positionner l'enjoliveur par rapport au châssis au moyen dudit au moins un orifice guide,
- fixer l'enjoliveur sur le châssis grâce aux moyens de fixation.

Le positionnement est par exemple réalisé en :
- faisant coulisser l'enjoliveur parallèlement au châssis de la porte suivant un mouvement vers le bas de la porte en suivant ledit au moins un orifice guide de sorte que l'enjoliveur puisse être disposé sous une coulisse disposée sur le bord de la porte,
- faisant coulisser l'enjoliveur parallèlement au châssis en suivant ledit au moins un orifice guide selon un mouvement vers le haut et le bord de la porte de sorte que les bords de l'enjoliveur soient sous la coulisse en bout de course dudit au moins un orifice guide.

En particulier, la partie saillante du deuxième élément peut être formée par au moins une vis d'un système vis-écrou des moyens de fixation, l'étape de fixation consiste alors à serrer le ou les systèmes vis-écrou des moyens de fixation.

En particulier également, lors du positionnement de l'enjoliveur, ladite au moins une languette du deuxième élément faisant partie des moyens de fixation vient s'encliqueter sur le bord du châssis.

L'invention est maintenant décrite en référence aux dessins annexés, non limitatifs, dans lesquels :
- la figure 1 est une vue en perspective de la face interne d'un premier élément d'un enjoliveur selon l'invention pour porte droite de véhicule ;
- la figure 2 est une vue en perspective d'un deuxième élément de l'enjoliveur de la figure 1, vu du côté opposé au côté destiné à être solidarisé au premier élément ;
- la figure 3 est une vue en perspective d'un enjoliveur pour porte gauche de véhicule comportant des premier et second éléments similaires à ceux représentés sur les figures 1 et 2 ;
- la figure 4 est une vue de face d'une partie du châssis de la porte gauche d'un véhicule apte à recevoir un enjoliveur selon l'invention ;
- les figures 5, 6, 7 représentent les différentes étapes de montage d'un enjoliveur selon l'invention sur le châssis de la figure 4, seul le deuxième élément de l'enjoliveur étant représenté pour plus de clarté ;
- les figures 8 et 9 sont des vues en coupe transversales d'un enjoliveur monté sur un châssis de porte suivant les lignes A-A et B-B respectivement de la figure 7.

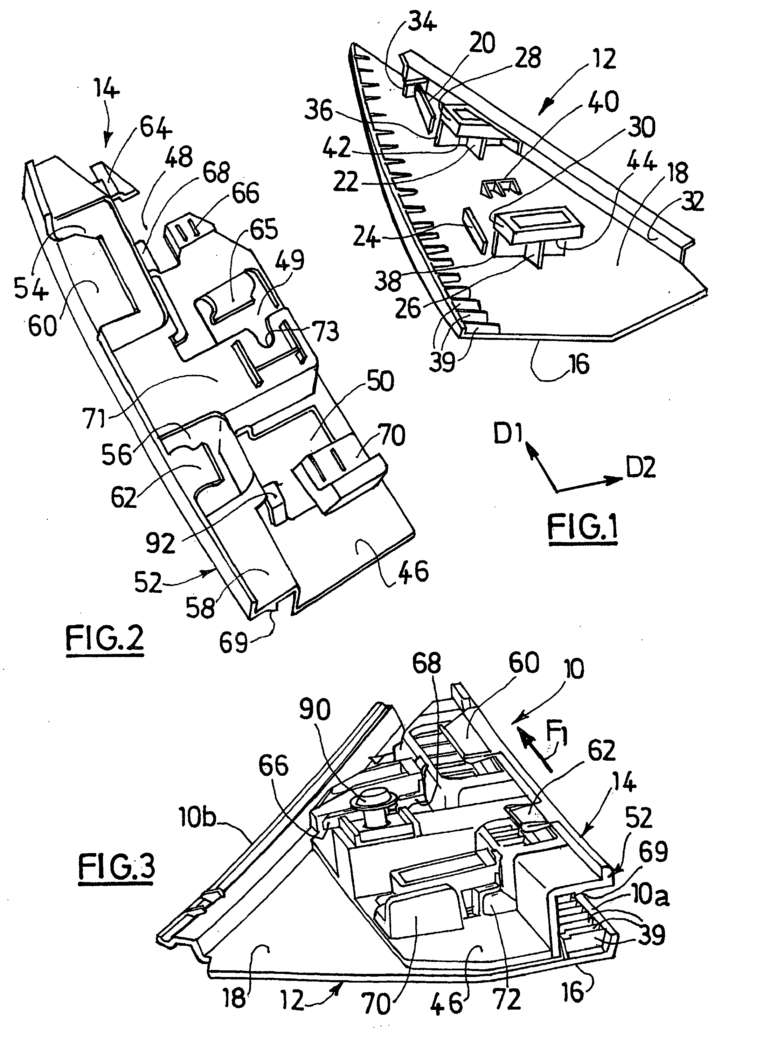

Sur les figures 1 et 2, l'enjoliveur représenté correspond à un enjoliveur destiné à une porte droite de véhicule, tandis que sur les figures 3 à 9, l'enjoliveur représenté est destiné à une porte gauche de véhicule, chacun des enjoliveurs étant l'image de l'autre dans un miroir. Les enjoliveurs représentés sont destinés à des portes arrière de véhicule, ils peuvent toutefois être utilisés sur des portes avant.

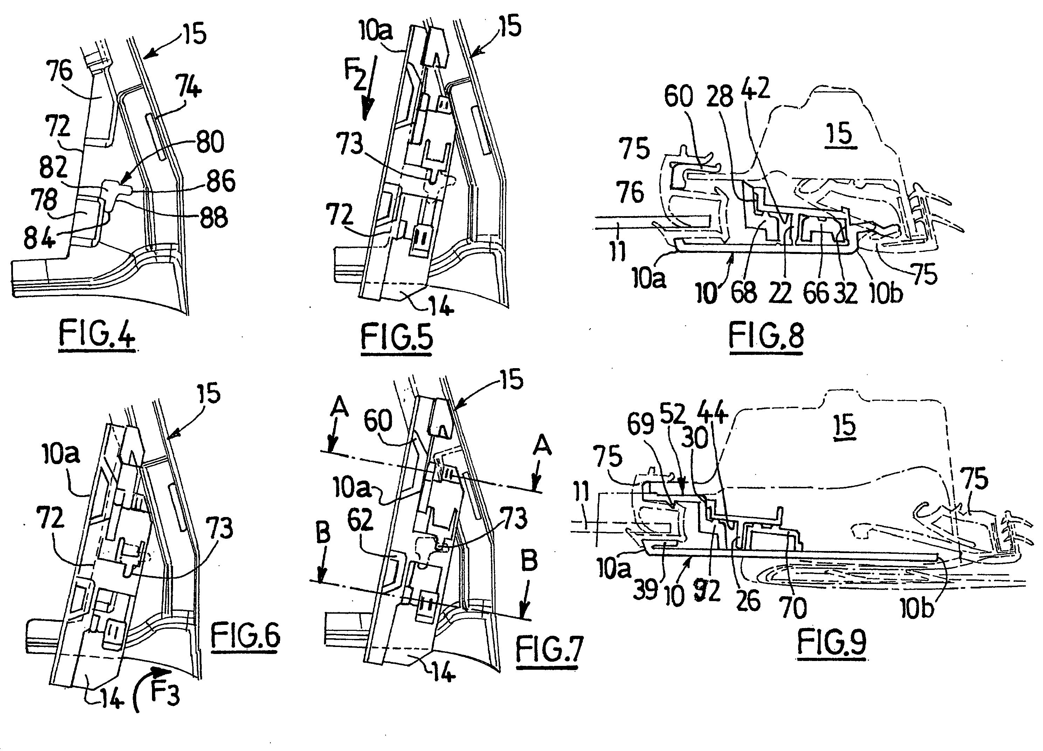

Un enjoliveur 10 selon l'invention comprend un premier élément 12, représenté figure 1 et un second élément 14 représenté figure 2. L'enjoliveur 10 tel que représenté figure 3 est destiné à être fixé sur un châssis 15 d'une porte de véhicule. On désigne par la référence 10a le bord de l'enjoliveur situé à proximité de la vitre 11 (représentée figures 8 et 9), et par 10b le bord de l'enjoliveur situé à proximité du bord extérieur de la porte.

Le premier élément 12 comprend une face externe 16 destinée à être visible de l'extérieur du véhicule. Cette face présente de préférence un aspect régulier et agréable à regarder. Il comporte également une face interne 18, opposée à la face externe, et dirigée vers le châssis 15 de la porte en position montée. Le premier élément peut être en matière plastique similaire à la matière utilisée pour les autres enjoliveurs du véhicule. On peut toutefois envisager l'utilisation de métal.

L'enjoliveur 10 comporte des moyens de solidarisation du deuxième élément 14 avec le premier élément 12. Ces moyens comprennent des surfaces de butées disposées sur le premier élément 12 contre lesquelles des protubérances disposées sur le deuxième élément 14 viennent en butée, de sorte que, une fois monté, les premier et deuxième éléments soient solidaires et ne puissent être déplacés l'un par rapport à l'autre.

Ces surfaces de butée sont décrites en référence à la figure 1. Le premier élément 12 se présente sous la forme d'une plaque de forme sensiblement triangulaire dont un côté est la face externe 16 et l'autre côté la face interne 18 du premier élément. La face interne 18 comporte une pluralité de premières surfaces 20, 22, 24, 26, 28, 30, s'étendant parallèlement à une première direction D1 dans le plan de la face 18 et sensiblement perpendiculairement à cette dernière. De préférence, elles sont réparties régulièrement suivant la direction D1 sur sensiblement toute la longueur du premier élément.

Une autre première surface 32 est formée le long d'un bord du premier élément et s'étend perpendiculairement à la surface interne 18. Dans le mode de réalisation représenté, elle s'étend suivant une direction sécante à la direction D1.

Le premier élément 12 est conçu de sorte que les premières surfaces 20, 22 et 28 soient situées respectivement dans le prolongement des premières surfaces 24, 26 et 30 suivant D1. Ces trois groupes de premières surfaces sont décalés les uns des autres suivant une direction D2 sensiblement perpendiculaire à la première direction D1. (figures 8, 9).

Le premier élément 12 comporte une pluralité de deuxièmes surfaces de butée 34, 36, 38, 40 s'étendant parallèlement à la deuxième direction D2, sur la face interne 18, sensiblement perpendiculairement à cette dernière. Les deuxièmes surfaces sont distantes les unes des autres suivant la première direction D1. De préférence, elles sont réparties régulièrement suivant la direction D1.

Le premier élément 12 comporte une pluralité de troisièmes surfaces de butée 42, 44 qui s'étendent dans un plan sensiblement parallèle à la surface interne 18, à distance de cette dernière (figures 8 et 9). Ces troisièmes surfaces sont supportées par une partie des premières et secondes surfaces de butée. Ainsi, la troisième surface 44 est supportée par la première surface 26 et la deuxième surface 38 qui sont solidaires, et la troisième surface 42 est supportée par la première surface 22 et la deuxième surface 36 qui sont solidaires. Par ailleurs, les premières surfaces 28 et 30 sont supportées par les troisièmes surfaces 42 et 44 respectivement. Cet agencement permet de créer des logements dans lesquelles vont venir se loger des protubérances du deuxième élément 14.

A cet effet, le deuxième élément 14 présente une forme irrégulière représentée figure 2. Il comprend une base 46 comportant des évidements 48, 50 permettant le passage des troisièmes surfaces 42, 44 respectivement. Un des bords de la base 46 présente un rebord 52 dont la section transversale est en forme de marche d'escalier (figures 3 et 9). Ce rebord 52 s'étend sensiblement suivant la direction D 1 lorsque le deuxième élément est solidarisé au premier élément. Des évidements 54, 56 sont formés dans la surface supérieure 58 de ce rebord 52, cette surface s'étendant sensiblement parallèlement à la base 46. Au niveau de chaque évidement 54, 56, une languette 60, 62 respectivement fait saillie du bord du deuxième élément vers l'intérieur de l'évidement correspondant dans la direction D2 et s'étend dans un plan sensiblement parallèle à la surface supérieure 58 et légèrement espacé de cette dernière.

La base 46 présente une face sensiblement plane destinée à venir en appui sur la face interne 18 du premier élément, et une face opposée présentant des protubérances 64, 66, 68, 70 et 92 aptes à venir en butée contre les surfaces de butée du premier élément. Ainsi, la protubérance 64 vient en butée contre les première et deuxième surfaces 20, 34 et la surface 32. La protubérance 66 vient en butée contre la troisième surface 42, et ne peut être déplacée suivant la direction D2 en raison des premières surfaces 22 et 32, tandis que son déplacement suivant D1 est limité par la deuxième surface 36. La protubérance 68 vient en butée contre la troisième surface 42. La protubérance 70 vient en butée contre la troisième surface 44, tandis qu'un déplacement suivant D1 et D2 est interdit respectivement par la deuxième surface 38 et la première surface 26. Enfin, la protubérance 92 vient en butée contre la troisième surface 44 (figure 9), son déplacement suivant D1 étant limité par la deuxième surface 38. Les deuxièmes surfaces 28 et 30 du premier élément viennent par ailleurs en butée contre le rebord 52 du deuxième élément.

Du fait de la disposition des premières surfaces 22, 26, les protubérances 66 et 70 sont alignées suivant la direction D1, et les protubérances 64, 68 et 92 sont alignées suivant la direction D1 à distance des protubérances 66 et 70 suivant D2. Ainsi, une fois monté, le deuxième élément ne peut pas se déplacer suivant D2 et un premier sens de D1 (flèche F1 figure 3), mais peut encore se déplacer suivant le deuxième sens opposé de D1.

Afin de limiter le déplacement du deuxième élément suivant ce deuxième sens, ce dernier présente, dans un évidement 49 de sa base 46, une languette 65 s'étendant dans un plan sensiblement parallèle à la base et dont l'extrémité libre vient en butée contre la deuxième surface 40 du premier élément en position montée. Ainsi, il suffit de soulever la languette 65 au-dessus de la surface 40 pour pouvoir déplacer le deuxième élément par rapport au premier élément suivant ce deuxième sens.

Sensiblement à mi distance des extrémités de la base 46 suivant la direction D1, la surface 58 s'étend sur sensiblement toute la largeur de la base 46 (suivant la direction D2) de façon à former une bande 71. Cette dernière est reliée à la base 46 par des plans sensiblement perpendiculaires à celle-ci. L'extrémité de cette bande 71 présente un orifice 73 apte à recevoir un moyen de fixation du deuxième élément sur le châssis du véhicule.

Les dimensions de la base 46 du deuxième élément sont inférieures ou égales aux dimensions de la face interne 18 du premier élément. Dans le mode de réalisation représenté, ces dimensions sont inférieures, afin de répondre aux exigences de dimension du dispositif. Il est ainsi possible de faire varier l'épaisseur totale du dispositif afin de rattraper l'écart entre la vitre et la custode, par exemple en faisant varier l'épaisseur du deuxième élément. Cela permet également un gain de matière, le deuxième élément pouvant être en matière plastique ou en métal selon les besoins.

Lors du montage, le deuxième élément est placé au-dessus de la face interne 18 du premier élément, sa base 46 dirigée vers la face interne 18, de sorte que les évidements 48 et 50 soient placés sensiblement au droit des surfaces 42 et 44 respectivement. Le deuxième élément 12 est alors abaissé, sa base 46 étant en contact avec la face interne 18. On fait alors coulisser le deuxième élément dans le sens F1 de la direction D1, les premières surfaces 20, 24, 28 et 30 servant de guide, jusqu'à ce que le deuxième élément soit en butée contre les deuxièmes surfaces 34, 36 et 38 par l'intermédiaire de ses protubérances 64, 66 et 70, la languette 65 étant alors en butée contre la surface 40 du premier élément. Le deuxième élément est ainsi bloqué en translation suivant la direction D1. Un déplacement suivant la direction D2 est interdit par les deuxièmes surfaces 20, 22, 26 d'une part et les deuxièmes surfaces 28, 30 et 32 d'autre part. Le déplacement suivant une direction perpendiculaire à la base 46 est interdit par les troisièmes surfaces 42 et 44.

Lorsque l'enjoliveur 10 est monté, l'orifice 73 du deuxième élément est situé sensiblement au centre du premier élément. De plus, en raison de la forme en marche d'escalier du rebord 52 du deuxième élément, une cavité de section en U s'étendant suivant la direction D1 est formée entre la face interne 18 du premier élément et la surface 58 du deuxième élément. Cette cavité forme un cadre de guidage pour une vitre ou un autre élément du véhicule.

Le montage de l'enjoliveur formé des éléments 12 et 14 sur le châssis 15 d'une porte est maintenant décrit en référence aux figures 4 à 7. Seule la partie du châssis disposée à côté de la vitre de la porte est représentée sur les figures. Le châssis est vu de l'extérieur du véhicule. La vitre 11 (non représentée) est placée le long d'un bord 72 de la partie de châssis 15. L'autre bord 74 de la partie de châssis 15 forme le bord extérieur de la porte. Le long de son bord 72, la partie de châssis présente deux zones 76, 78 d'encliquetage pour les languettes 60 et 62 du deuxième élément de l'enjoliveur. La partie de châssis 15 présente également un orifice de guidage 80 en forme de coin, situé sensiblement à mi distance entre les bords 72 et 74. Cet orifice présente une partie centrale 82, une aile 84 dirigée vers le bas de la porte, et sensiblement parallèle au bord 72, et une autre aile 86 dirigée vers le bord 74 suivant une direction sensiblement perpendiculaire à l'aile 84. Les extrémités des première et deuxième ailes 84, 86 sont reliées par une surface courbe 88.

Lors du montage de l'enjoliveur 10, des joints 75, appelés coulisses, sont disposés sur les bords 72 et 74 de la partie de châssis. Ils ne sont pas représentés sur les figures 4 à 7 pour plus de clarté. Un ensemble vis-écrou 90, visible sur la figure 3 mais pas sur les figures 5 à 7, est inséré dans l'orifice 73 du deuxième élément 14, de sorte que la tête de la vis soit dirigée à l'opposé du premier élément. L'enjoliveur 10 est alors placé contre le châssis 15, le deuxième élément 14 étant dirigé vers le châssis. La tête de la vis du système vis-écrou 90 est insérée dans la partie centrale 82 de l'orifice de guidage 80 (figure 5). Ce dernier est situé de sorte que le bord 10a de l'enjoliveur comportant le cadre de guidage de vitre est situé au-delà du bord 72. L'enjoliveur 10 est ensuite déplacé vers le bas de la porte suivant la flèche F2, son mouvement étant guidé par le déplacement du système vis écrou 90 dans l'aile 84 de l'orifice de guidage, jusqu'à ce que le système 90 soit en butée contre l'extrémité de cette aile (figure 6). Les bords 10a, 10b de l'enjoliveur sont alors sensiblement parallèles aux bords 72, 74 du châssis. L'enjoliveur est ensuite déplacé suivant un mouvement allant du bas de la porte vers le haut et le bord 74 de la porte, suivant la flèche F3. Ce mouvement correspond au déplacement du système vis écrou 90 le long de la surface 88 de l'orifice de guidage 80 jusqu'à l'extrémité de l'aile 86 de ce dernier (figure 7). Lors de ce mouvement, le bord 10b de l'enjoliveur est glissé entre le bord 74 du châssis 15 et la coulisse 75, tandis que les languettes 60, 62 viennent s'encliqueter sur les zones 76, 78 d'encliquetage correspondantes. Le système vis-écrou 90 est alors serré de manière à fixer l'enjoliveur 10 sur le châssis. Un joint lécheur de porte peut alors être mis en place.

Les positions relatives de la coulisse 75, de la vitre 11 et de l'enjoliveur 10 sont visibles sur les figures 8 et 9. Il est visible que le côté 10b de l'enjoliveur est glissé sous la coulisse 75, tandis que du côté de la vitre, le rebord 52 du deuxième élément est glissé sous une partie de la coulisse 75, l'autre partie de la coulisse étant insérée dans le cadre de guidage autour de la vitre 11.

Afin de retenir la coulisse 75 dans le cadre de guidage, des saillies 39 et 69 sont prévues. Une pluralité de saillies 39 est prévue sur le bord de la face interne 18 du premier élément 12, du côté 10a de l'enjoliveur. Elles s'étendent parallèlement à la direction D2 et sont régulièrement espacées suivant D1. Une saillie longitudinale 69 est prévue sur le côté de la surface 58 dirigé vers la base 46 du deuxième élément. Cette saillie 69 s'étend sensiblement perpendiculairement à la surface 58 parallèlement à la direction D1.

Afin de rigidifier l'élément 12, ce dernier peut comporter une nervure de rigidification au niveau de son bord proche de la surface 32. Il s'agit par exemple d'une surface (non représentée) s'étendant perpendiculairement à la face 18 suivant la direction D2, et supportée par la troisième surface 42. Cette nervure est solidaire de la première surface 28 et s'étend jusqu'au bord de l'élément 12, en étant solidaire de ce bord suivant la direction de D2.

Bien entendu, d'autres modes de réalisation de l'enjoliveur peuvent être envisagés. Notamment on peut prévoir d'autres moyens de solidarisation des deux éléments, tels que des moyens d'encliquetage, ou une solidarisation par rivet, vissage ou analogue. Par ailleurs, les surfaces de butée et les protubérances peuvent être disposées différemment pour permettre un montage du deuxième élément sur le premier élément suivant une autre direction.

Concernant les moyens de fixation, plusieurs systèmes vis-écrou peuvent être prévus en deux, trois points, ou plus, de l'enjoliveur pour renforcer la fixation au châssis. Enfin, on peut envisager qu'à la place d'un système vis-écrou, on utilise une ou plusieurs parties saillantes solidaires du deuxième élément aptes à être insérées dans un ou plusieurs orifices de guidage du châssis pour le guidage de l'enjoliveur lors du montage.

Selon la forme extérieure du véhicule, les premier et deuxième éléments peuvent présenter une forme courbe, et/ou l'enjoliveur peut présenter une épaisseur variable. Il est ainsi possible de préserver l'aérodynamisme de l'ensemble enjoliveur, vitre et custode.

## Revendications

1. Enjoliveur (10) pour porte de véhicule automobile, comprenant un premier élément (12) présentant une face externe (16) destinée à être visible de l'extérieur du véhicule et une face interne (18) opposée, et un deuxième élément (14), et comprenant des moyens de solidarisation dudit deuxième élément sur ledit premier élément, et des moyens de fixation (90) dudit deuxième élément sur le châssis (15) de la porte, **caractérisé en ce qu'**il comporte sur au moins l'un de ses côtés un cadre de guidage formé par lesdits premier (12) et deuxième (14) éléments et apte à recevoir le bord d'une vitre (11) ou un joint (75) de vitre.

2. Enjoliveur selon la revendication 1, **caractérisé en ce que** les moyens de solidarisation sont aptes à empêcher tout mouvement relatif des deux éléments.

3. Enjoliveur selon l'une des revendications 1 ou 2, **caractérisé en ce que** les moyens de solidarisation présentent des protubérances (64, 66, 68, 70, 92) solidaires du deuxième élément (14) venant en appui contre des surfaces de butée (20, 22, 24, 26, 28, 30, 32, 34, 36, 38, 40, 42, 44) solidaires du premier élément (12).

4. Enjoliveur selon la revendication 3, **caractérisé en ce que** le premier élément est pourvu :
- d'une pluralité de premières surfaces de butée (20, 22, 24, 26, 28, 30, 32) sensiblement perpendiculaires à la face interne (18) du premier élément et s'étendant sensiblement dans une première direction (D1) de ladite face, au moins une partie desdites premières surfaces étant distante d'au moins une autre partie desdites premières surfaces suivant une deuxième direction (D2),
- d'une pluralité de deuxièmes surfaces de butée (34, 36, 38, 40) sensiblement perpendiculaires à la face interne (18) du premier élément et s'étendant dans la deuxième direction (D2), au moins une partie desdites deuxièmes surfaces étant distante d'au moins une autre partie desdites deuxièmes surfaces suivant la première direction (D1), et
- d'une pluralité de troisièmes surfaces de butée (42, 44) s'étendant dans un plan sensiblement parallèle à la face interne (18) du premier élément et distant de ce dernier, ladite pluralité de troisièmes surfaces étant supportée par une partie de la pluralité de premières surfaces et/ou une partie de la pluralité de deuxièmes surfaces.

5. Enjoliveur selon l'une des revendications 1 à 4, **caractérisé en ce que** le deuxième élément (14) comprend au moins une languette d'encliquetage (60, 62) s'étendant sur au moins un de ses bords et formant des moyens de fixation sur le châssis (15) de la porte.

6. Enjoliveur selon l'une des revendications 1 à 5, **caractérisé en ce que** les moyens de fixation comprennent au moins un système vis-écrou (90) apte à coopérer avec au moins un orifice (73) correspondant du deuxième élément, et au moins un orifice guide (80) correspondant du châssis (15) de la porte.

7. Enjoliveur selon la revendication 6, destiné à une porte droite de véhicule, respectivement à une porte gauche, **caractérisé en ce que** le pas de vis du système vis-écrou (90) est orienté vers la droite, respectivement vers la gauche.

8. Enjoliveur selon l'une des revendications précédentes, **caractérisé en ce que** le premier élément et/ou le deuxième élément est (sont) en matière plastique.

9. Enjoliveur selon l'une des revendications précédentes, **caractérisé en ce que** l'épaisseur du premier élément est sensiblement constante.

10. Procédé de montage d'un enjoliveur selon l'une des revendications précédentes sur un châssis (15) de porte de véhicule, comprenant les étapes consistant à :
- solidariser les premier et deuxième éléments (12, 14) de l'enjoliveur grâce aux moyens de solidarisation,
- insérer au moins une partie saillante du deuxième élément (14) de l'enjoliveur dans au moins un orifice guide (80) prévu à cet effet dans ledit châssis (15),
- positionner l'enjoliveur (10) par rapport au châssis (15) au moyen dudit au moins un orifice guide (80).
- fixer l'enjoliveur sur le châssis (15) grâce aux moyens de fixation.

11. Procédé selon la revendication 10, **caractérisé en ce que** l'étape de positionnement de l'enjoliveur (10) comprend les étapes consistant à :
- faire coulisser l'enjoliveur (10) parallèlement au châssis de la porte suivant un mouvement vers le bas de la porte en suivant ledit au moins un orifice guide (80) de sorte que l'enjoliveur puisse être disposé sous une coulisse (75) disposée sur le bord de la porte,
- faire coulisser l'enjoliveur parallèlement au châssis en suivant ledit au moins un orifice guide (80) selon un mouvement vers le haut et le bord de la porte de sorte que les bords de l'enjoliveur soient sous la coulisse en bout de course dudit au moins un orifice guide (80).

12. Procédé selon la revendication 10 ou 11, **caractérisé en ce que** ladite au moins une partie saillante du deuxième élément est formée par au moins une vis d'un système vis-écrou (90) des moyens de fixation et **en ce que** l'étape de fixation consiste à serrer le ou les systèmes vis-écrou des moyens de fixation.

13. Procédé selon l'une des revendications 10 à 12, **caractérisé en ce que** lors du positionnement de l'enjoliveur, ladite au moins une languette (60, 62) du deuxième élément faisant partie des moyens de fixation vient s'encliqueter sur un bord correspondant (76, 78) du châssis.

## Patentansprüche

1. Zierleiste (10) für eine Tür eines Kraftfahrzeugs, aufweisend ein erstes Element (12), welches eine äußere Seite (16), die dazu bestimmt ist, von der Außenseite des Fahrzeuges sichtbar zu sein, und eine gegenüberliegende innere Seite (18) aufweist und ein zweites Element (14) und aufweisend Verbindungsmittel des zweiten Elements an dem ersten Element und Befestigungsmittel (90) des zweiten Elements an dem Chassis (15) der Tür, **dadurch gekennzeichnet, dass** sie auf mindestens einer ihrer Seiten einen Führungsrahmen aufweist, der durch das erste Element (12) und das zweite Element (14) gebildet wird und welcher fähig ist, den Rand einer Fensterscheibe (11) oder einer Dichtung (75) einer Fensterscheibe aufzunehmen.

2. Zierleiste nach Anspruch 1, **dadurch gekennzeichnet, dass** die Verbindungsmittel fähig sind, jede relative Bewegung der zwei Elemente zu verhindern.

3. Zierleiste nach einem der Ansprüche 1 oder 2, **dadurch gekennzeichnet, dass** die Verbindungsmittel Ausstülpungen (64, 66, 68, 70, 92) aufweisen, die fest mit dem zweiten Element (14) verbunden sind, welche gegen Anschlagflächen (20, 22, 24, 26, 28, 30, 32, 34, 36, 38, 40, 42, 44), die fest mit dem ersten Element (12) verbunden sind, in Anlage kommen.

4. Zierleiste nach Anspruch 3, **dadurch gekennzeichnet, dass** das erste Element versehen ist mit:
- einer Mehrzahl von ersten Anschlagflächen (20, 22, 24, 26, 28, 30, 32), die im Wesentlichen senkrecht zur inneren Seite (18) des ersten Elements sind und welche sich im Wesentlichen in einer ersten Richtung (D1) der Seite erstrecken, wobei mindestens ein Teil der ersten Flächen von mindestens einem anderen Teil der ersten Flächen gemäß einer zweiten Richtung (D2) beabstandet ist,
- einer Mehrzahl von zweiten Anschlagflächen (34, 36, 38, 40), die im Wesentlichen senkrecht zur inneren Seite (18) des ersten Elements sind und welche sich in der zweiten Richtung (D2) erstrecken, wobei mindestens ein Teil der zweiten Flächen von mindestens einem anderen Teil der zweiten Flächen gemäß der ersten Richtung (D1) beabstandet ist, und
- einer Mehrzahl von dritten Anschlagflächen (42, 44), die sich in einer Ebene erstrecken, die im Wesentlichen parallel zur inneren Seite (18) des ersten Elements und beabstandet von diesem letzteren ist, wobei die Mehrzahl der dritten Flächen durch einen Teil der Mehrzahl der ersten Flächen und/oder einen Teil der Mehrzahl der zweiten Flächen getragen wird.

5. Zierleiste nach einem der Ansprüche 1 bis 4, **dadurch gekennzeichnet, dass** das zweite Element (14) mindestens eine Einrastzunge (60, 62) aufweist, die sich über mindestens einen seiner Ränder erstreckt und Befestigungsmittel an dem Chassis (15) der Tür bildet.

6. Zierleiste nach einem der Ansprüche 1 bis 5, **dadurch gekennzeichnet, dass** die Befestigungsmittel mindestens ein Schrauben-Mutter-System (90) aufweisen, das fähig ist, mit mindestens einer entsprechenden Öffnung (73) des zweiten Elements und mindestens einer entsprechenden Führungsöffnung (80) des Chassis (15) der Tür zusammenzuwirken.

7. Zierleiste nach Anspruch 6, welche für eine rechte Fahrzeugtür bzw. für eine linke Tür bestimmt ist, **dadurch gekennzeichnet, dass** die Gewindesteigung des Schrauben-Mutter-Systems (90) nach rechts bzw. nach links ausgerichtet ist.

8. Zierleiste nach einem der vorangegangenen Ansprüche, **dadurch gekennzeichnet, dass** das erste Element und/oder das zweite Element aus einem Kunststoffmaterial ist (sind).

9. Zierleiste nach einem der vorangegangenen Ansprüche, **dadurch gekennzeichnet, dass** die Dicke des ersten Elements im Wesentlichen konstant ist.

10. Verfahren zur Montage einer Zierleiste gemäß einem der vorangegangenen Ansprüche an einem Chassis (15) einer Fahrzeugtür, aufweisend die Schritte bestehend aus:
- Verbinden des ersten Elements und des zweiten Elements (12, 14) der Zierleiste mittels der Verbindungsmittel,
- Einfügen mindestens eines vorragenden Teils des zweiten Elements (14) der Zierleiste in mindestens eine Führungsöffnung (80), die zu diesem Zweck in dem Chassis (15) vorgesehen ist,
- Positionieren der Zierleiste (10) im Verhältnis zum Chassis (15) mittels der mindestens einen Führungsöffnung (80),
- Befestigen der Zierleiste an dem Chassis (15) mittels der Befestigungsmittel.

11. Verfahren nach Anspruch 10, **dadurch gekennzeichnet, dass** der Schritt des Positionierens der Zierleiste (10) die Schritte aufweist bestehend aus:
- Gleitenlassen der Zierleiste (10) parallel zum Chassis der Tür gemäß einer Bewegung in Richtung nach unten von der Tür und gemäß der mindestens einen Führungsöffnung (80), derart, dass die Zierleiste unter einer Führung (75) angeordnet werden kann, die an dem Rand der Tür angeordnet ist,
- Gleitenlassen der Zierleiste parallel zum Chassis gemäß der mindestens einen Führungsöffnung (80) gemäß einer Bewegung in Richtung nach oben und dem Rand der Tür, derart, dass die Ränder der Zierleiste unter der Führung am Ende der Bahn der mindestens einen Führungsöffnung (80) sind.

12. Verfahren nach Anspruch 10 oder 11, **dadurch gekennzeichnet, dass** der mindestens eine vorragende Teil des zweiten Elements durch mindestens eine Schraube eines Schrauben-Mutter-Systems (90) der Befestigungsmittel gebildet ist und dass der Schritt der Befestigung im Festziehen des oder der Schrauben-Mutter-System(e) der Befestigungsmittel besteht.

13. Verfahren nach einem der Ansprüche 10 bis 12, **dadurch gekennzeichnet, dass** während dem Positionieren der Zierleiste die mindestens eine Zunge (60, 62) des zweiten Elements, welche einen Teil der Befestigungsmittel bildet, an einem entsprechenden Rand (76, 78) des Chassis einrastet.

## Claims

1. A trim (10) for an automobile vehicle door, comprising a first member (12) having an outer surface (16) adapted to be visible from outside the vehicle and an opposing inner surface (18), and a second member (14), and comprising means for making the second member rigid with the first member, and means (90) for securing the second member on the door chassis (15), **characterised in that** it comprises, on at least one of its sides, a guide framework formed by the first and second members (12, 14) and adapted to receive the edge of a window (11) or a window joint (75).

2. A trim as claimed in claim 1, **characterised in that** the rigid securing means are adapted to inhibit any relative movement of the two members.

3. A trim as claimed in one of claims 1 or 2, **characterised in that** the rigid securing means have projections (64, 66, 68, 70, 92) rigid with the second member (14) and bearing on abutment surfaces (20, 22, 24, 26, 28, 30, 32, 34, 36, 38, 40, 42, 44) rigid with the first member (12).

4. A trim as claimed in claim 3, **characterised in that** the first member is provided with:
- a plurality of first abutment surfaces (20, 22, 24, 26, 28, 30, 32) substantially perpendicular to the inner surface (18) of the first member and extending substantially in a first direction (D1) of this surface, at least a part of said first surfaces being remote from at least another part of these first surfaces in a second direction (D2),
- a plurality of second abutment surfaces (34, 36, 38, 40) substantially perpendicular to the inner surface (18) of the first member and extending in a second direction (D2), at least a part of these second surfaces being remote from at least another part of these second surfaces in the first direction (D1), and
- a plurality of third abutment surfaces (42, 44) extending in a plane substantially parallel to the inner surface (18) of the first member and remote from the latter, said plurality of third surfaces being supported by a part of the plurality of first surfaces and/or a part of the plurality of second surfaces.

5. A trim as claimed in one of claims 1 to 4, **characterised in that** the second member (14) comprises at least one snap-locking tongue (60, 62) extending over at least one of its edges and forming the means for fastening on the door chassis (15).

6. A trim as claimed in one of claims 1 to 5, **characterised in that** the fastening means comprise at least one screw and nut system (90) adapted to cooperate with at least one corresponding opening (73) of the second member, and at least one corresponding guide opening (80) of the door chassis (15).

7. A trim as claimed in claim 6, adapted respectively for a right-hand door or a left-hand door of a vehicle, **characterised in that** the screw portion of the screw and nut system (90) is oriented respectively towards the right or the left.

8. A trim as claimed in one of the preceding claims, **characterised in that** the first member and/or the second member is(are) of plastic material.

9. A trim as claimed in one of the preceding claims, **characterised in that** the thickness of the first member is substantially constant.

10. A method of assembly of a trim as claimed in one of the preceding claims on a vehicle door chassis (15), comprising the stages of:
- making the first and second members (12, 14) of the trim rigid by means of the rigid securing means,
- inserting at least one projecting portion of the second member (14) of the trim in at least one guide opening (80) provided for that purpose in the chassis (15),
- positioning the trim (10) with respect to the chassis (15) by means of at least the one guide opening (80),
- securing the trim on the chassis (15) by means of the fastening means.

11. A method as claimed in claim 10, **characterised in that** the stage of positioning of the trim (10) comprises the stages of:
- causing the trim (10) to slide parallel to the door chassis with a movement towards the bottom of the door following at least the one guide opening (80) so that the trim can be disposed below a slide (75) disposed on the edge of the door,
- causing the trim to slide parallel to the door chassis following at least the one guide opening (80) with a movement towards the top and the edge of the door so that the edges of the trim are below the slide at the end of the stroke of at least the one guide opening (80).

12. A method as claimed in claim 10 or 11, **characterised in that** at least the one projecting part of the second member is formed by at least one screw of a screw and nut system (90) of the fastening means and **in that** the fastening stage consists in tightening the screw and nut system(s) of the fastening means.

13. A method as claimed in one of claims 10 to 12, **characterised in that** during the positioning of the trim, at least the one tongue (60, 62) of the second member forming part of the fastening means is snap-locked on a corresponding edge (76, 78) of the chassis.
